# EUROPÄISCHE PATENTSCHRIFT

(11) **EP 1 516 699 B1**
(45) Veröffentlichungstag und Bekanntmachung des Hinweises auf die Patenterteilung: **08.10.2008**
(21) Anmeldenummer: 04022114.5
(22) Anmeldetag: 17.09.2004
(51) Int. Cl.: B23Q 39/04, B23Q 5/34

(54) **Fertigung- und/oder Montagevorrichtung**
Production and/or assembly device
Dispositif de préparation et/ou de montage

(30) Priorität: 19.09.2003 DE 10343978
(43) Veröffentlichungstag der Anmeldung: 23.03.2005
(73) Patentinhaber: Feintool International Holding, 3250 Lyss (CH)
(72) Erfinder: Kumeth, Sigmund, 92280 Kastl (DE)
(74) Vertreter: Blaumeier, Jörg

(56) Entgegenhaltungen:
- EP-A- 0 438 975
- DE-C1- 4 212 887
- US-A- 4 313 260
- US-A- 5 603 245
- US-B1- 6 553 656

## Beschreibung

Die Erfindung betrifft eine Fertigungs- und/oder Montagevorrichtung zum Fertigen und/oder Montieren eines Werkstücks, mit einem Vorrichtungsgestell und einem mehrere Werkstückträger aufweisenden, bezüglich einer oder mehrerer feststehender Arbeitsstationen rotierend und getaktet bewegbaren Werkstückträgertisch, sowie mit einem Antriebsmechanismus zum Antreiben der einen oder mehreren Arbeitsstationen, welcher Antriebsmechanismus einen Motor und wenigstens ein mit dem Motor indirekt bewegungsgekoppeltes, im Wesentlichen vertikal bewegbares Kupplungselement, mit dem ein Mitnehmer einer Antriebsstation gekoppelt oder koppelbar ist, aufweist, wobei der Antriebsmechanismus eine über den Motor rotierend antreibbare, vertikal angeordnete Arbeitswelle mit einer Führungseinrichtung, mit der das Kupplungselement bewegungsgekoppelt ist und über das die Vertikalbewegung des Kupplungselements gesteuert wird, aufweist

Eine Fertigungs- und/oder Montagevorrichtung ist beispielsweise aus DE 197 49 633 A1 bekannt. Es handelt sich um einen Rundtaktautomaten mit einem Werkstückträgertisch, auch Drehteller genannt, an dem die Werkstückträger um eine zentrale Vorrichtungsachse getaktet bezüglich oberhalb davon angeordneter Arbeitsstationen, die unterschiedliche Aufgaben erfüllen können, bewegt werden. Eine solche Vorrichtung kommt überall dort zum Einsatz, wo maschinell in mehreren Fertigungs- oder Montagestufen ein Gegenstand herzustellen ist, beispielsweise bei der Herstellung elektrotechnischer oder elektromechanischer Bauteile, feinmechanischer Werkstücke oder auch im pharmazeutischen Bereich wie auch in der Automobilindustrie. Mit einer solchen Vorrichtung ist es möglich, das Werkstück kontinuierlich Stück für Stück zusammenzusetzen oder herzustellen, wozu es getaktet zu den jeweiligen Arbeitsstationen gebracht wird, die Einzelteile des Werkstücks, die über vorrichtungsseitig ebenfalls vorgesehene Zubringeinrichtungen herangefördert werden, greifen und verbauen können oder sonstige Tätigkeiten bezüglich des Werkstücks durchführen können. Als Arbeitsstationen können beispielsweise Handlingeinrichtungen in Form von Zangen und Greifern zum Einsatz kommen, gleichermaßen sind aber auch Schraub-, Schweiß- oder Löteinrichtungen wie auch Präge- oder Druckeinrichtungen einsetzbar. Bei einer Zubringeinrichtung kann es sich beispielsweise um eine Bauteilfördereinrichtung handeln, gleichermaßen auch um eine Stapeleinheit oder ein Stanzband mit einer entsprechenden Stanzeinrichtung, um aus einem Bauteilband die erforderlichen Komponenten herauszustanzen, welche anschließend mit der Arbeitsstation zu verarbeiten sind.

Der Antrieb der Arbeitsstationen erfolgt über einen speziellen, hierfür vorgesehenen Antriebsmechanismus, der sicherstellt, dass die Arbeitsstationen zeitgenau die jeweils erforderliche Funktion durchführen. Dies erfolgt in der Regel mechanisch gesteuert. Zentrales Antriebselement ist ein Motor, der indirekt mit einem oder zwei im oberen Bereich, also im Bereich der Arbeitsstationen vorgesehenen Kupplungselementen bewegungsgekoppelt ist. Mit diesen Kupplungselementen ist wiederum ein Mitnehmer, in der Regel in Form eines Arbeitshebels einer Arbeitsstation gekoppelt. Über den Motor und den Antriebsmechanismus ist es nun möglich, das oder die Kupplungselemente vertikal zu bewegen, was zu einer entsprechenden Mitnehmer- oder Arbeitshebelbewegung der Arbeitsstation führt, die dann die entsprechend zugeordnete Vertikal- oder Horizontalbewegung durchführt.

Ein bekannter Antriebsmechanismus, wie er beispielsweise aus DE 197 28 264 A1 bekannt ist, umfasst den Motor, der über ein nachgeschaltetes Winkelgetriebe zwei Kurvenscheiben antreibt, die um eine horizontale Achse drehen. Diese sind wiederum mit zwei vertikal angeordneten Hubstangen verbunden, die die Vorrichtung vertikal durchsetzen, und an deren oberem Ende die ring- oder scheibenartigen Kupplungselemente angeordnet sind, mit denen die Mitnehmer der Arbeitsstationen gekoppelt sind. Bei einer Rotation der Kurvenscheiben werden die Hubstangen entsprechend der Scheibenform vertikal bewegt, und mit ihnen die Kupplungselemente, über die die Bewegung der Arbeitsstationen letztlich gesteuert wird.

Bei der aus DE 197 28 264 bekannten Vorrichtung sind die zentralen Elemente des Antriebsmechanismus, nämlich der Motor, das Winkelgetriebe sowie die Kurvenscheiben im Vorrichtungsgestell unterhalb des Aufbautellers, auf dem die Zuführeinrichtungen angeordnet sind, positioniert. Das heißt, der gesamte untere Bereich des Vorrichtungsgestells ist mit dem Antriebsmechanismus belegt. Neben dem Umstand, dass ein solcher Antrieb sehr komplex und aufwendig ausgelegt ist, besteht ferner die Notwendigkeit, einen separaten Steuerschrank vorzusehen, in dem die Vorrichtungssteuerung untergebracht ist, nachdem vorrichtungsseitig kein Raum hierfür mehr gegeben ist.

Eine Vorrichtung der eingangs beschriebenen Art ist aus DE 42 12 887 C1 bekannt. Die entsprechenden Versorgungs- und Steuerleitungen sind, soweit der dortigen Figur zu entnehmen ist, allesamt freiliegend geführt. Dies ist insofern nachteilig, als sich die Steuerleitungen mitunter bei Reparatur- oder Montagetätigkeiten im Arbeitsbereich befinden. Auch kann, sofern solche letztlich freiliegend geführten Leitungen über Kabelbinder oder dergleichen fixiert sind, sich eine solche Halteverbindung lösen, so dass eine Leitung in den Arbeitsbereich einer Arbeitsstation oder eines sonstigen Arbeitsteils der Vorrichtung gelangen und beschädigt werden kann.

Ferner ist aus US 4,313,260 eine Montagevorrichtung bekannt, bei der die Bewegung der Arbeitsstationen über mit den Mitnehmerplatten, mit denen die Arbeitsstationen gekoppelt sind, gekoppelten Zapfen, die in an der zentralen, vertikal stehenden Drehwelle angeordnete Führungsnuten eingreifen, gesteuert wird. Die Führungsnuten sind an den entsprechenden Ringen, die an der Drehwelle angeordnet sind, vorgesehen.

Der Erfindung liegt damit das Problem zugrunde, eine Vorrichtung anzugeben, die diesbezüglich verbessert ist.

Zur Lösung dieses Problems ist bei einer Fertigungs- und/oder Montagevorrichtung der eingangs genannten Art erfindungsgemäß vorgesehen, dass die Antriebswelle eine Hohlwelle ist, durch die Versorgungs- und/oder elektrische Steuerleitungen von einer im Vorrichtungsgestell unterhalb einer unteren Aufbauplatte angeordneten Steuerungseinrichtung oder Versorgungseinrichtung zu den Antriebsstationen oder anderen Verbrauchern geführt sind.

Die erfindungsgemäße Vorrichtung schlägt ein völlig neues Antriebskonzept vor, bei dem im Bereich unterhalb des Aufbautellers, also im unteren Bereich des Vorrichtungsgestells lediglich der Motor und ein ihm nachgeschaltetes Getriebe positioniert ist. Die der Vertikalführung des oder der Kupplungselemente dienenden Komponenten sind sämtlich nach oben verlagert, sie befinde sich also nicht mehr wie im Stand der Technik im unteren Bereich des Vorrichtungsgestells. Der Antrieb erfolgt über eine rotierende, zentrale vertikale Antriebswelle, an der eine Führungseinrichtung vorgesehen ist, die bei einer Wellenrotation gleichermaßen rotiert, und mit der ein Kupplungselement bewegungsgekoppelt ist. Die Führungseinrichtung ist derart ausgelegt, dass die gewünschte Vertikalbewegung des Kupplungselements entsprechend gesteuert wird.

Der bei der erfindungsgemäßen Vorrichtung konzipierte Antriebsmechanismus ist gegenüber dem bisher bekannten Kurvenscheiben- und Hubstangenmechanismus wesentlich einfacher ausgestaltet. Dies führt weiterhin zu einer deutlichen Reduzierung der Herstellungskosten. Ein weiterer bemerkenswerter Vorteil ist, dass im unteren Bereich der Vorrichtung, also unterhalb der Aufbauplatte keinerlei weitere Antriebskomponenten außer dem Motor und dem relativ kleinformatig dimensionierten Getriebe vorzusehen sind. Dieser Raum kann mit besonderem Vorteil zur Integration der Steuerungseinrichtung genutzt werden, so dass auch der im Stand der Technik stets erforderliche separate Steuerschrank entfällt. Insgesamt wird auf Basis des erfindungsgemäßen Antriebsmechanismus eine wesentliche Vorrichtungsvereinfachung realisiert, wobei mit der erfindungsgemäßen Vorrichtung jedoch gleichermaßen hinsichtlich der Anzahl der Antriebsstationen auslegbare Vorrichtungen in der aus DE 197 49 633 A1 bekannten Modulbauweise in einem standardisierten Grundgestell konzipiert werden können.

Besonders zweckmäßig ist es, dass die Antriebswelle eine Hohlwelle ist. Diese ermöglicht es, durch die Hohlwelle die Versorgungs- und/oder Steuerleitungen von einer im Vorrichtungsgestell unterhalb des bereits beschriebenen Aufbautisches angeordneten Steuerungseinrichtung zu den Antriebsstationen oder anderen Verbrauchern im oberen Vorrichtungsbereich zu führen.

Wie bereits beschrieben besteht die Möglichkeit, an der vertikalen Antriebswelle eine Führungseinrichtung anzuordnen, die für eine Horizontal- oder Vertikalbewegung der Arbeitsstation bzw. ihres Arbeitsgeräts je nach Auslegung sorgt. Selbstverständlich besteht auch die Möglichkeit, zwei separate, übereinander angeordnete Führungseinrichtungen vorzusehen, mit denen jeweils ein Kupplungselement, mit denen jeweils ein Mitnehmer einer Arbeitsstation gekoppelt oder koppelbar ist, bewegungsgekoppelt ist. In diesem Fall wäre ein Kupplungselement für die Vertikal- und das andere für die Horizontalbewegung der Antriebsstation vorgesehen.

Nach einer ersten Erfindungsausgestaltung kann eine Führungseinrichtung als nach außen ragender, umlaufender Führungsvorsprung ausgebildet sein, auf dem ein oder mehrere am Kupplungselement vorgesehene Lauf- oder Gleitelemente laufen, die zweckmäßigerweise als Rollen oder Walzen ausgebildet sein können. Der Führungsvorsprung läuft um die Antriebswelle herum und beschreibt eine Kurven- oder Wellenform, der das Kupplungselement aufgrund seiner Kopplung über die Rollen oder Walzen folgt und entsprechend der Kurvenform vertikal bewegt wird. Zweckmäßigerweise sind dabei zwei Lauf- oder Gleitelemente, insbesondere zwei Rollen oder Walzen einander gegenüberstehend angeordnet, das Paar nimmt also den Führungsvorsprung zwischen sich auf. Zur Anpassung ist es zweckmäßig, wenn das oder zumindest ein Teil der Lauf- oder Gleitelemente, insbesondere der Rollen oder der Walzen vertikal verstellbar ist.

Alternativ zur Auslegung der Führungseinrichtung mit einem nach außen vorspringenden Führungsvorsprung besteht die Möglichkeit, dass die Führungseinrichtung als umlaufende Nut ausgebildet ist, in die eine oder mehrere am Kupplungselement vorgesehene Lauf- oder Gleitelemente, in diesem Fall zweckmäßigerweise als im Wesentlichen horizontal vorspringende Zapfen ausgebildet, eingreifen. Auch in diesem Fall beschreibt die Führungsnut, die um die Antriebsachse umläuft, eine entsprechende Kurven- oder Wellenform, die die Vertikalbewegung steuert, und der das Kupplungselement entsprechend folgt.

Eine zweckmäßige Erfindungsausgestaltung sieht vor, den Führungsvorsprung oder die Führungsnut an einem an der Antriebswelle angeordneten Ring auszubilden. Dieser Ring, der entsprechend separat gefertigt werden kann, wird in geeigneter Weise an der Antriebswelle befestigt. Sind zwei Führungseinrichtungen vorgesehen, sind selbstverständlich zwei entsprechende Ringe wellenseitig angeordnet.

Wie beschrieben erfolgt die Steuerung der Vertikalbewegung der Kupplungselemente dadurch, dass die Lauf- oder Gleitelemente von dem Führungsvorsprung oder der Führungsnut geführt werden. Um eine möglichst reibungsfreie Bewegung zu realisieren, besteht die Möglichkeit, dass das oder die Lauf- oder Gleitelemente eine einen geringen Reibungswiderstand aufweisende Beschichtung aufweisen oder aus einem solchen Material sind. Selbstverständlich können sie auch von Haus aus aus Metall sein, solange ein möglichst reibungsfreier Lauf gewährleistet ist.

Der Motor selbst treibt erfindungsgemäß ein Antriebszahnrad vorzugsweise über ein zwischengeschaltetes Getriebe an, welches direkt oder indirekt mit einem an der vertikalen Antriebswelle vorgesehenen Zahnrad oder Zahnkranz zusammenwirkt und die Welle antreibt.

Dem Motor kommt bei der erfindungsgemäßen Anlage aber nicht nur die Funktion zu, die Antriebswelle und damit die Kupplungselemente anzutreiben, er hat vielmehr ferner auch die Funktion, für den Antrieb des Drehtellers, an dem die Werkstückträger angeordnet sind, zu sorgen. Zu diesem Zweck ist erfindungsgemäß über den Motor eine Treiberscheibe rotierend antreibbar, die einen Mitnehmer aufweist, der zum getakteten Bewegen des Werkstückträgers mit einer diesem zugeordneten Indexscheibe zusammenwirkt, die wiederum mit dem Drehteller verbunden ist. Um auf einfache Weise für einen gemeinsamen Antrieb sowohl der Treiberscheibe wie auch der Antriebswelle zu sorgen, ist es zweckmäßig, wenn das über den Motor angetriebene Antriebszahnrad über ein Zwischenzahnrad mit dem wellenseitigen Zahnrad oder Zahnkranz zusammenwirkt, und wenn ein mit dem Zwischenzahnrad um dieselbe Achse drehbares weiteres Zahnrad vorgesehen ist, das mit einem an der Treiberscheibe vorgesehen Zahnrad zusammenwirkt. Zweckmäßigerweise sind das weitere Zahnrad und das treiberscheibenseitige Zahnrad als Ellipsenzahnräder ausgeführt. Zur Ermöglichung einer Änderung des Arbeitstaktes ist es ferner möglich, das über den Motor angetriebene Antriebszahnrad und das Zwischenzahnrad, die beide lösbar sind, gegeneinander auszutauschen. Aufgrund der unterschiedlichen Übersetzungsverhältnisse bzw. Zahnradauslegung ergibt sich folglich eine Antriebs- und Taktänderung, die ausgenutzt werden kann.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Perspektivansicht einer erfindungsgemäßen Fertigungs- und/oder Montagevorrichtung,
- Fig. 2: eine Perspektivansicht des Vorrichtungsgestells mit dem Arbeitsaufbau,
- Fig. 3: eine Seitenansicht der Darstellung aus Fig. 2,
- Fig. 4: eine Detaildarstellung des Antriebsmechanismus für die Kupplungselemente sowie des Drehtellers,
- Fig. 5: eine Detaildarstellung der Vorrichtung im Bereich der Antriebsstationen,
- Fig. 6: die Ansicht aus Fig. 5 mit lediglich einem Kupplungselement,
- Fig. 7: ein Führungsring mit einem Führungsvorsprung für den Vertikalhub, und
- Fig. 8: ein Führungsring mit einem Führungsvorsprung für den Horizontalhub.

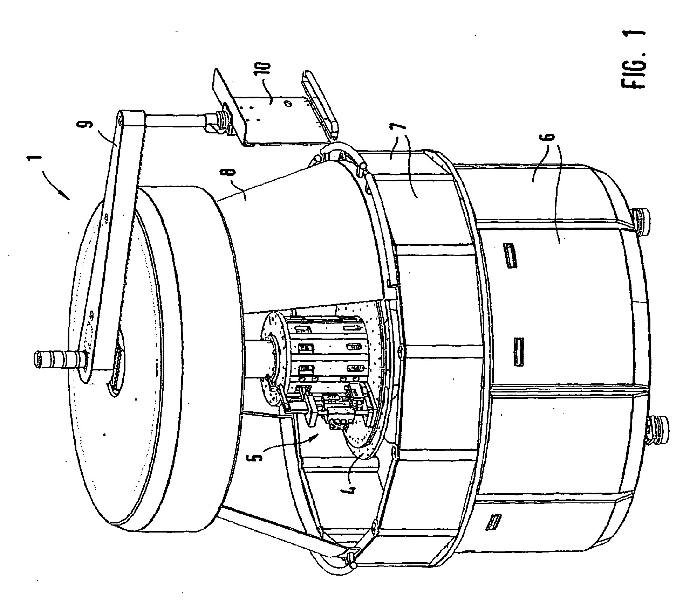

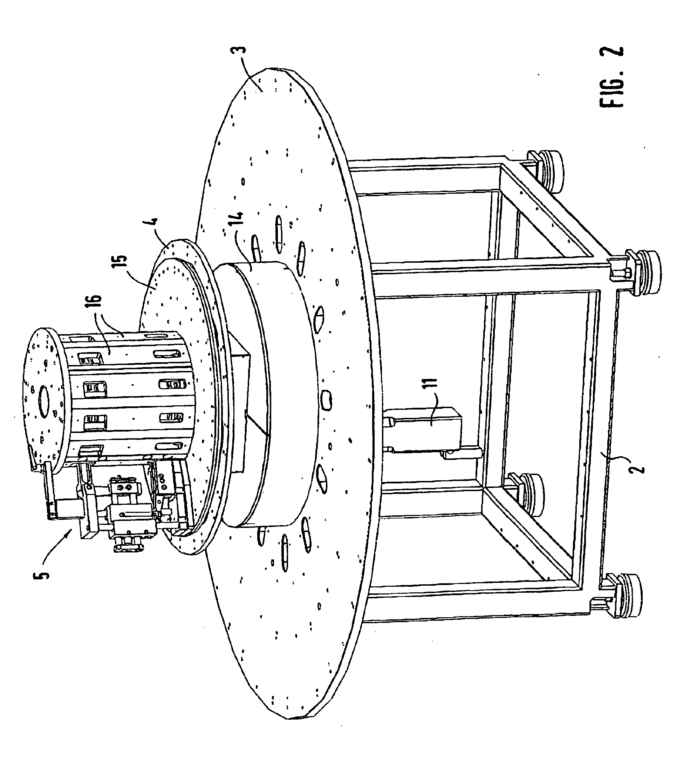

Fig. 1 zeigt eine erfindungsgemäße Fertigungs- und/oder Montagevorrichtung 1. Diese umfasst, siehe Fig. 2, ein Vorrichtungsgestell 2, auf dem oberseitig eine Aufbauplatte 3 angeordnet ist, auf der entsprechende, nicht näher gezeigte Zuführeinrichtungen angeordnet werden können. Die lokale Positionierung wie auch die Anzahl der anordbaren Zubringeinrichtungen hängt vom Bohrbild der Befestigungslöcher der Aufbauplatte 3 ab. Vorgesehen ist ferner ein Werkstückträgertisch 4 in Form eines Drehtellers, an dem ebenfalls nicht näher gezeigte Werkstückträger in geeigneten Aufnahmen befestigt werden können. Dieser Drehteller 4 kann, wie nachfolgend noch beschrieben wird, getaktet bezüglich feststehend angeordneter Arbeitsstationen 5, von denen eine in den Fig. 1 und 2 gezeigt ist, bewegt werden. Diese Arbeitsstationen dienen beispielsweise zum Entnehmen eines von einer Zubringeinrichtung angeförderten Kleinteils und zum Verbauen desselben am Werkstück im Werkstückträger, der sich im Arbeitsbereich der Arbeitsstation 5 befindet.

Im unteren Bereich ist das Vorrichtungsgestell über entsprechende Platten oder Scheiben 6, die zum Teil lösbar sind, um das Vorrichtungsinnere zu gelangen, geschlossen. Auch der daran anschließende Bereich, in dem die Zubringeinrichtungen befestigt werden können, ist zumindest solange, als keine vorgesehen sind, über geeignete Platten oder Scheiben 7 geschlossen. Ferner ist der obere Bereich, in dem die Bewegung etwaiger beweglicher Teile der Zubringeinrichtungen und insbesondere der Arbeitsstationen erfolgt, über im gezeigten Beispiel gebogenen Scheiben 8 komplett geschlossen. Um in das Innere zu gelangen, ist es möglich, eine Scheibe 8'etwas nach außen zu bewegen und geführt über eine benachbarte Scheibe zu schieben. Gezeigt ist ferner der Horizontalträger 9, an dem eine Aufnahme 10 für eine nicht näher gezeigte Bedieneinrichtung vorgesehen ist.

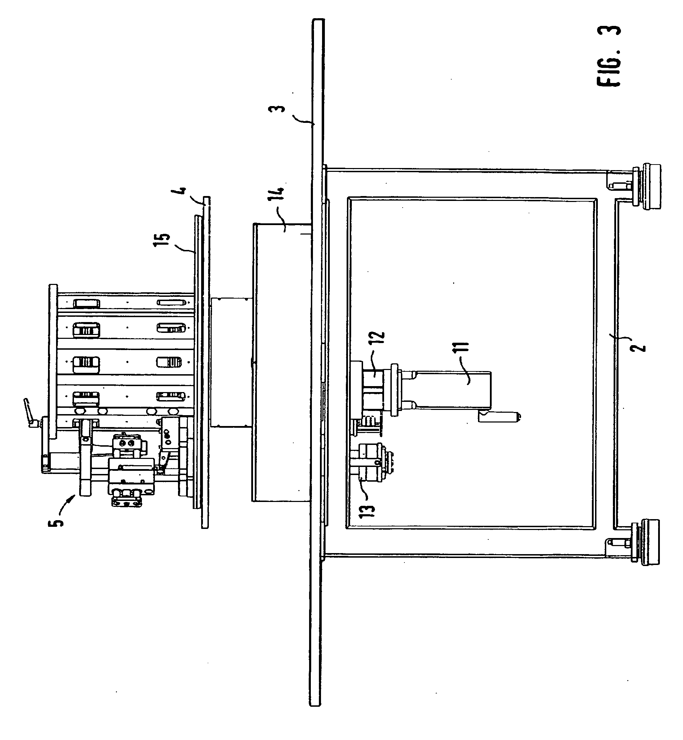

Fig. 2 und Fig. 3 zeigen die Vorrichtung aus Fig. 1 ohne die Gehäuseteile. Gezeigt ist ein im Inneren des Vorrichtungsgestells 2 unterhalb der Aufbauplatte 3 angeordneter Motor 11, dem die zentrale Antriebsfunktion sowohl der Arbeitsstationen 5 als auch des Drehtellers 4 zukommt. Im Bereich unterhalb des Aufbautellers 3 befindet sich ferner noch das dem Motor nachgeschaltete Getriebe 12 sowie eine Überlastkupplung 13, worauf nachfolgend noch eingegangen wird. Oberhalb des Aufbautellers 3 befindet sich das Getriebegehäuse 14, in dem die Bewegungskopplung zwischen Motor 11 bzw. Getriebe 12 und nachgeschalteten Antriebskomponenten erfolgt. Dem Getriebegehäuse 14 nachgeschaltet ist der Drehteller 4 sowie die feststehende Aufbauplatte 15, auf der wie beschrieben die Arbeitsstationen 5 gemäß dem dortigen Bohrbild positioniert werden können. Diese greifen über noch zu beschreibende Mitnehmer in Form von Hebelarmen an entsprechenden Kupplungselementen in Form von scheiben- oder ringartigen Hubtellern an, die hinter geeigneten Verkleidungsteilen 16 angeordnet sind.

Wie insbesondere Fig. 3 zeigt, befindet sich bei der erfindungsgemäßen Vorrichtung im Bereich des Vorrichtungsgestells 2 lediglich der Motor 11, das Getriebe 12 sowie die Überlastkupplung 13. Ansonsten steht der gesamte Bereich zur Integration der Steuerungseinrichtung der Vorrichtung zur Verfügung.

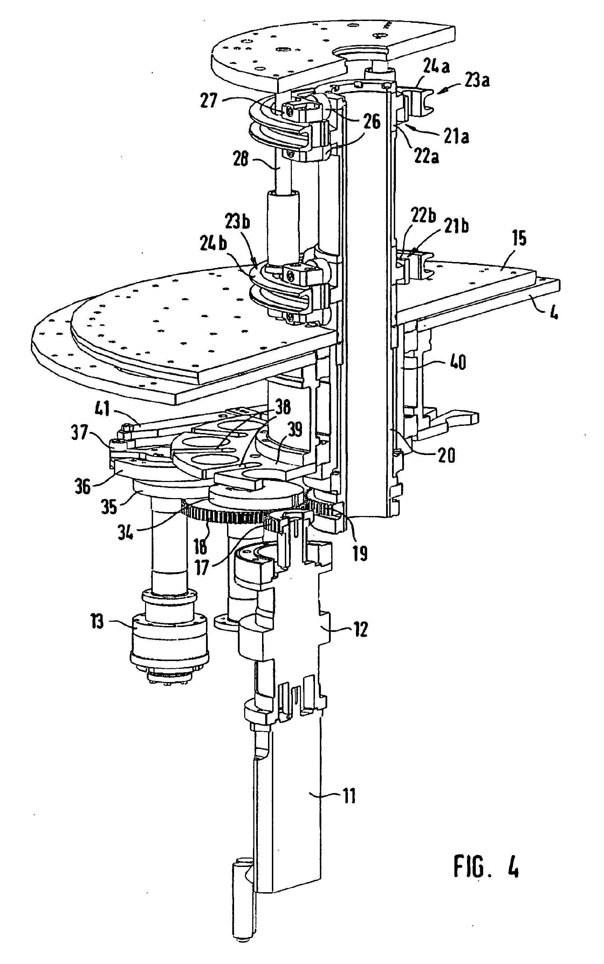

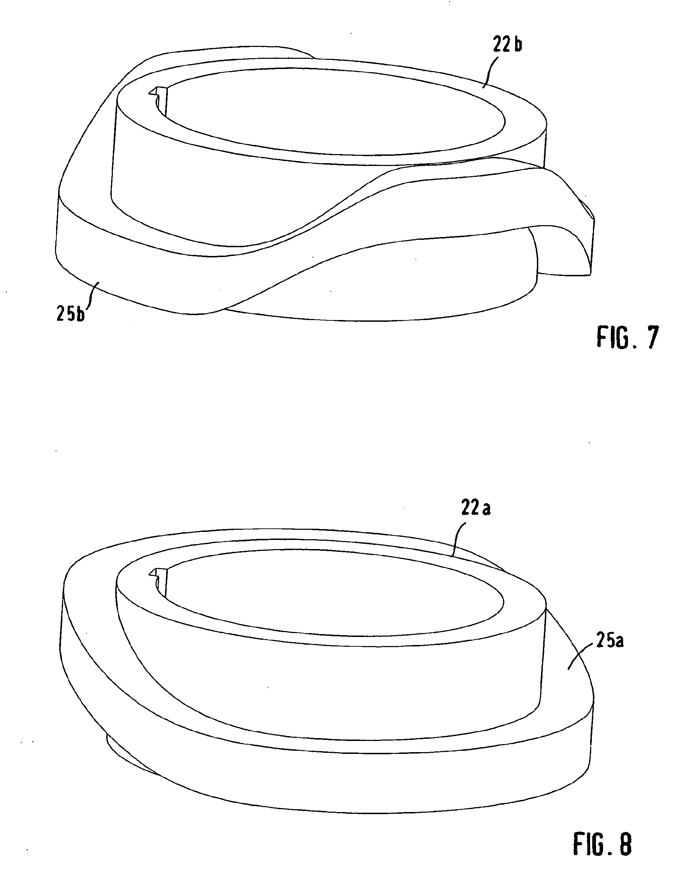

Fig. 4 zeigt den erfindungsgemäßen Antriebsmechanismus für die Arbeitsstationen 5 wie auch für den Drehteller 4. Gezeigt ist der Motor 11 und das ihm nachgeschaltete Getriebe 12. Über dieses wird ein Antriebszahnrad 17 angetrieben, das mit einem Zwischenzahnrad 18 kämmt. Dieses Zwischenzahnrad 18 seinerseits kämmt mit einem Zahnrad oder Zahnkranz 19, der an einer hohlen Antriebswelle 20 angeordnet ist. Diese hohle Antriebswelle erstreckt sich aus dem Getriebegehäuse 14, wo die beschriebene Zahnradverbindung angeordnet ist, durch eine zentrale Öffnung im Drehteller 4 und der Aufbauplatte 15 bis in den oberen Vorrichtungsbereich, wo sie entsprechend gelagert ist. An der Antriebswelle 15 sind im Bereich oberhalb der Aufbauplatte 15 zwei Führungseinrichtungen 21a und 21b in Form von Führungsringen 22a, 22b vorgesehen, die fest mit der Antriebswelle 20 verbunden sind. Diese Führungsringe 22a, 22b, auf die nachfolgend noch eingegangen wird, haben die Aufgabe, für eine Vertikalführung von mit ihnen gekoppelten Kupplungselementen 23a, 23b zu sorgen, die beide als ring- oder scheibenförmige Hubteller 24a, 24b ausgebildet sind. Zu diesem Zweck sind, siehe die Fig. 7 und 8, an den Führungsringen 22a, 22b Führungsvorsprünge 25a bzw. 25b vorgesehen, die radial nach außen vorspringen und eine Kurven- oder Wellenform beschreiben. Auf diesen Führungsvorsprüngen 25a, 25b laufen ober- und unterseitig Lauf- oder Gleitelemente 26 in Form zweier Rollen oder Walzen, wie in Fig. 4 gezeigt. Diese Lauf- oder Gleitelemente sind in geeigneten Aufnahmen 27 am Innenumfang eines jeweiligen Hubtellers 24a, 24b angeordnet. Wenigstens eine der Rollen oder Walzen ist vertikal bewegbar angeordnet, um die gesamte Mimik in exakte Anlage an den jeweiligen Führungsvorsprung zu bringen.

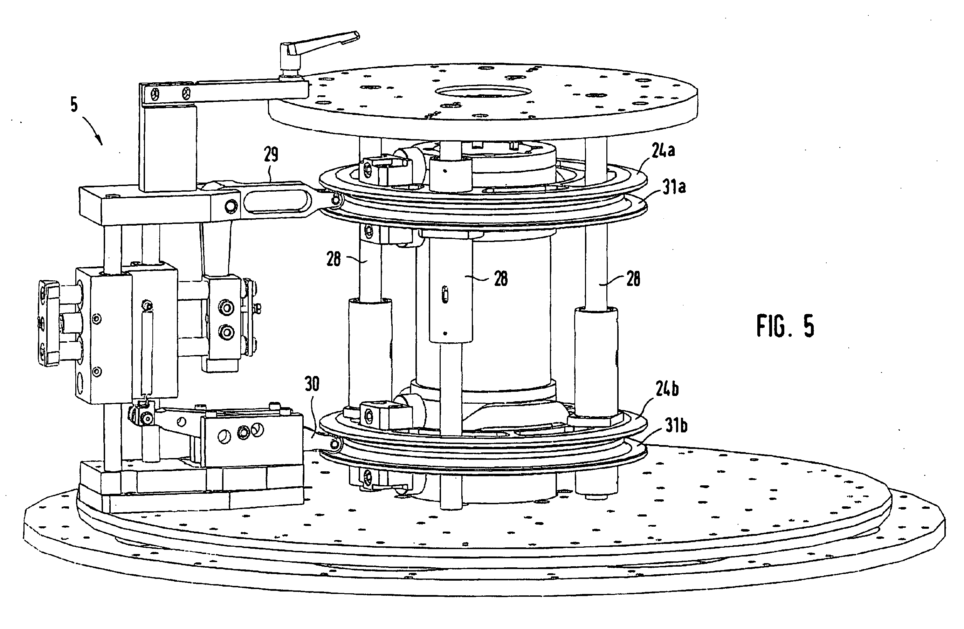

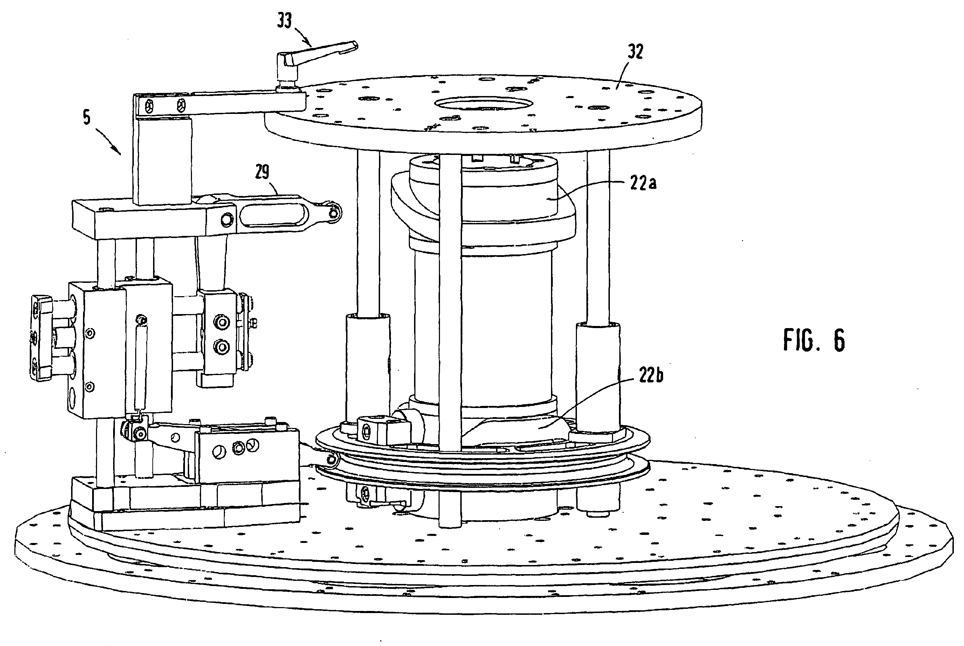

Wird nun der Motor 11 angetrieben, so erfolgt hierüber ein indirekter Antrieb der Antriebswelle 20. Bei einer Rotation der Antriebswelle 20 drehen auch die beiden Führungsringe 22a, 22b und mit ihnen die jeweiligen Führungsvorsprünge 25a, 25b. Aufgrund ihrer Kurvenform werden nun, der Form folgend, infolge des Rollen- oder Walzenabgriffs auch die beiden Hubteller 24a, 24b, die an geeigneten Vertikalführungen 28 angeordnet sind, vertikal bewegt. Diese Vertikalbewegung wird auf Mitnehmer 29, 30 einer Arbeitsstation 5 übertragen, welche Mitnehmer 29 und 30 als Arbeitshebel ausgebildet sind. Diese greifen mit ihren inwärtigen Enden in eine Kupplungsnut 31a bzw. 31b des jeweiligen Hubtellers 24a, 24b. Bei einer Vertikalbewegung des jeweiligen Hubtellers 24a, 24b werden also auch die entsprechenden Mitnehmer 29, 30 vertikal bewegt. Diese jeweilige Vertikalbewegung wird in eine entsprechende Horizontalbewegung eines Arbeitselements der Arbeitsstation 5 (über den Mitnehmer 29) bzw. eine Vertikalbewegung eines Arbeitselements der Arbeitsstation 5 (über den Mitnehmer 30) gewandelt. Die Bewegungskopplung zwischen den Hubtellern und den jeweiligen Mitnehmern ist aus den Fig. 5 und 6 ersichtlich, wobei Fig. 5 die beiden Hubteller zeigt, während in Fig. 6 der obere Hubteller weggelassen ist. Die beiden Figuren zeigen weiterhin, dass oberseitig eine Abschlussplatte 32 vorgesehen ist, an der die Arbeitsstation über eine geeignete Befestigungseinrichtung 33 zusätzlich gehaltert ist.

Wie bereits beschrieben zeigen die Fig. 7 und 8 die beiden Führungsringe 22a, 22b. Wie beschrieben ist der Führungsring 22a bzw. sein Führungsvorsprung 25a für den Horizontalhub verantwortlich. Während einer Rotation des Führungsringes 22a läuft der Hubteller 24a einmal zwischen einer untersten und einer obersten Stellung hin und her. Hierüber wird während einer Wellenumdrehung eine einmalige Horizontalbewegung eines Arbeitselements der Arbeitsstation 5 nach außen und nach innen gesteuert.

Demgegenüber zeigt der Führungsvorsprung 25b des Führungsrings 22b, der für den Vertikalhub verantwortlich ist, zwei vollständige Kurven, das heißt, der Hubteller 24b läuft während einer Wellenumdrehung zweimal zwischen einer untersten und einer obersten Stellung hin und her. Dies führt dazu, dass das Arbeitselement über den Mitnehmer 30 gesteuert zwei Vertikalbewegungen während einer Wellenumdrehung durchführt. Selbstverständlich ist es je nach Ausgestaltung der Vorrichtung bzw. Arbeitsstation denkbar, auch andere Kurvenformen vorzusehen.

Wie aus Fig. 4 zu entnehmen ist, erfolgt über den Motor 11 nicht nur der Antrieb der Antriebswelle 20 und der Hubteller 24a, 24b und damit der Antrieb der Arbeitsstationen 5, sondern auch der Antrieb des Drehtellers 4. Zu diesem Zweck ist auf dem Zwischenzahnrad 18, um die gleiche Achse drehend, ein weiteres Zahnrad 34 in Form eines Ellipsenzahnrades vorgesehen, das mit einem Zahnrad 35, das ebenfalls als Ellipsenzahnrad ausgebildet ist, kämmt, mit dem wiederum eine Treiberscheibe 36 mit einem nach oben vorspringenden Mitnehmer 37 verbunden ist. Die Treiberscheibe 36 wie auch das Zahnrad 35 sind mit der Überlastkupplung 13 verbunden. Bei Betrieb des Motors 11 dreht nun das Zwischenzahnrad 18 und mit ihm das weitere Zahnrad 34 und über dieses bewegt das Zahnrad 35 und damit die Treiberscheibe 36. Während einer solchen Rotation greift der Mitnehmer 37 in eine entsprechend positionierte Ausnehmung 38 an einer ebenfalls im Getriebegehäuse 14 angeordneten Indexscheibe 39, die ihrerseits über eine von der Antriebswelle 20 durchsetzte rohrartige Verbindung 40 mit dem Drehteller 4 gekoppelt ist. Über den Mitnehmer 37 wird nun die Indexscheibe 39 um ein Winkelinkrement um die zentrale Rotationsachse gedreht und mit ihr der Drehteller 4 um ein dem Takt entsprechendes Winkelinkrement weiterbewegt, das heißt, die jeweiligen Werkstückträger werden von einer Arbeitsstation zur jeweils nächsten gefördert. Ist die entsprechende Indexscheibenstellung erreicht und verlässt der Mitnehmer 37 die jeweilige Indexscheibennut 38, greift ein Arretierungsmittel 41 an der Indexscheibe 39 an, das diese in ihrer Position bis zur nächsten Verstellung arretiert.

Die erfindungsgemäße Vorrichtung umfasst ein neuartiges, standardisierbares Grundgestell, wie es in den Figuren dargestellt ist, dessen Antriebsmechanismus wesentlich einfacher konzipiert ist, und das darüber hinaus hinreichenden Aufnahmeraum für sämtliche Steuereinrichtungen bietet. Insgesamt kann so eine in sich geschlossene Vorrichtung geschaffen werden, die keinerlei externe zusätzliche Gerätschaften wie Steuerschrank etc. benötigt. An dem Grundgestell können, dem Modulgedanken der Vorrichtung folgend, je nach herzustellendem Werkstück bzw. zu verbauenden Teilen entsprechend ausgelegte Zuführeinrichtungen wie auch Arbeitsstationen und Werkstückträger lösbar angeordnet werden. Das heißt, es ist eine einfache Umrüstung des beschriebenen Grundgestells unter Verwendung entsprechend anders konzipierter Zuführeinrichtungen, Werkstückträger und Arbeitsstationen denkbar, um einen neuen Gegenstand herzustellen. Am grundsätzlichen Aufbau des Grundgestells ist hierbei nichts zu ändern.

## Patentansprüche

1. Fertigungs- und/oder Montagevorrichtung zum Fertigen und/oder Montieren eines Werkstücks, mit einem Vorrichtungsgestell und einem mehrere Werkstückträger aufweisenden, bezüglich einer oder mehrerer feststehender Arbeitsstationen (5) rotierend und getaktet bewegbaren Werkstückträgertisch (4), sowie mit einem Antriebsmechanismus zum Antreiben der einen oder mehreren Antriebsstationen (5), welcher Antriebsmechanismus einen Motor (11) und wenigstens ein mit dem Motor (11) indirekt bewegungsgekoppeltes, im Wesentlichen vertikal bewegbares Kupplungselement (24a, 24b), mit dem ein Mitnehmer einer Arbeitsstation (5) gekoppelt oder koppelbar ist, aufweist, wobei der Antriebsmechanismus eine über den Motor (11) rotierend antreibbare, vertikal angeordnete Arbeitswelle (20) mit einer Führungseinrichtung (21a, 21b), mit der das Kupplungselement (24a, 24b) bewegungsgekoppelt ist und über das die Vertikalbewegung des Kupplungselements (24a, 24b) gesteuert wird, aufweist, **dadurch gekennzeichnet, dass** die Antriebswelle (20) eine Hohlwelle ist, durch die Versorgungs- und/oder elektrische Steuerleitungen von einer im Vorrichtungsgestell (1) unterhalb einer unteren Aufbauplatte (3) angeordneten Steuerungseinrichtung oder Versorgungseinrichtung zu den Antriebsstationen oder anderen Verbrauchern geführt sind.

2. Fertigungs- und/oder Montagevorrichtung nach Anspruch 1, **dadurch gekennzeichnet, dass** an der vertikalen Arbeitswelle (20) zwei separate, übereinander angeordnete Führungseinrichtungen (21a, 21b) vorgesehen sind, mit denen jeweils ein Kupplungselement (24a, 24b), mit denen jeweils ein Mitnehmer (29, 30) einer Arbeitsstation (5) gekoppelt oder koppelbar ist, bewegungsgekoppelt ist.

3. Fertigungs- und/oder Montagevorrichtung nach Anspruch 1 oder 2, **dadurch gekennzeichnet, dass** eine Führungseinrichtung (21a, 21b) als nach außen ragender umlaufender Führungsvorsprung (25a, 25b) ausgebildet ist, auf dem ein oder mehrere am Kupplungselement (24a, 24b) vorgesehene Lauf- oder Gleitelemente (26) laufen.

4. Fertigungs- und/oder Montagevorrichtung nach Anspruch 3, **dadurch gekennzeichnet, dass** das oder die auf dem Führungsvorsprung (25a, 25b) laufenden Lauf- oder Gleitelemente (26) als Rollen oder Walzen ausgebildet sind.

5. Fertigungs- und/oder Montagevorrichtung nach Anspruch 3 oder 4, **dadurch gekennzeichnet, dass** zwei Lauf- oder Gleitelemente (26), insbesondere zwei Rollen oder Walzen einander gegenüberliegend angeordnet sind und den Führungsvorsprung (25a, 25b) zwischen sich aufnehmen.

6. Fertigungs- und/oder Montagevorrichtung nach einem der Ansprüche 3 bis 5, **dadurch gekennzeichnet, dass** zumindest ein Teil der Lauf- oder Gleitelemente (26), insbesondere der Rollen oder Walzen vertikal verstellbar ist.

7. Fertigungs- und/oder Montagevorrichtung nach Anspruch 1 oder 2, **dadurch gekennzeichnet, dass** die Führungseinrichtung als umlaufende Führungsnut ausgebildet ist, in die ein oder mehrere am Kupplungselement vorgesehene Lauf- oder Gleitelemente eingreifen.

8. Fertigungs- und/oder Montagevorrichtung nach Anspruch 7, **dadurch gekennzeichnet, dass** das oder die Lauf- oder Gleitelemente als im Wesentlichen horizontal vorspringende Zapfen ausgebildet sind.

9. Fertigungs- und/oder Montagevorrichtung nach einem der Ansprüche 3 bis 8, **dadurch gekennzeichnet, dass** der Führungsvorsprung (25a, 25b) oder die Führungsnut an einem an der Antriebswelle (20) angeordneten Ring (22a, 22b) ausgebildet ist.

10. Fertigungs- und/oder Montagevorrichtung nach einem der Ansprüche 3 bis 9, **dadurch gekennzeichnet, dass** das oder die Lauf- oder Gleitelemente (26) eine einen geringen Reibungswiderstand aufweisende Beschichtung aufweisen oder aus einem solchen Material sind.

11. Fertigungs- und/oder Montagevorrichtung nach einem der vorangehenden Ansprüche, **dadurch gekennzeichnet, dass** der Motor (11) ein Antriebszahnrad (17) antreibt, das direkt oder indirekt mit einem an der vertikalen Antriebswelle (20) vorgesehenen Zahnrad oder Zahnkranz (19) zusammenwirkt.

12. Fertigungs- und/oder Montagevorrichtung nach einem der vorangehenden Ansprüche, **dadurch gekennzeichnet, dass** über den Motor (11) eine Treiberscheibe (36) rotierend antreibbar ist, die einen Mitnehmer (37) aufweist, der zum getakteten Bewegen des Werkstückträgertischs (4) mit einer diesem zugeordneten Indexscheibe (39) zusammenwirkt.

13. Fertigungs- und/oder Montagevorrichtung nach Anspruch 11 und 12, **dadurch gekennzeichnet, dass** das über den Motor (11) antreibbare Antriebszahnrad (17) über ein Zwischenzahnrad (18) mit dem wellenseitigen Zahnrad oder Zahnkranz (19) zusammenwirkt, und dass ein mit dem Zwischenzahnrad (18) um dieselbe Achse drehbares weiteres Zahnrad (34) vorgesehen ist, das mit einem an der Treiberscheibe (36) vorgesehenen Zahnrad (35) zusammenwirkt.

14. Fertigungs- und/oder Montagevorrichtung nach Anspruch 13, **dadurch gekennzeichnet, dass** das weitere Zahnrad (34) und das treiberscheibenseitige Zahnrad (35) Ellipsenzahnräder sind.

15. Fertigungs- und/oder Montagevorrichtung nach einem der Ansprüche 12 bis 14, **dadurch gekennzeichnet, dass** das über den Motor (11) antreibbare Antriebszahnrad (17) und das Zwischenzahnrad (18) lösbar und gegeneinander austauschbar sind.

## Claims

1. Production and/or assembly apparatus for producing and/or assembling a workpiece, having an apparatus frame and a workpiece support table (4) having plural workpiece supports and being movable rotationally and cyclically relative to one or more fixed work stations (5), and having a drive mechanism for driving the one or more drive stations (5), which drive mechanism has a motor (11) and at least one coupling element (24a, 24b) movable substantially vertically whilst being indirectly coupled in motion to the motor (11), with which coupling element a driver of a work station (5) is coupled or couplable, wherein the drive mechanism has a vertically disposed work shaft (20) which is drivable in rotation via the motor (11) and has a guide device (21 a, 21 b), to which the coupling element (24a, 24b) is coupled in motion and via which the vertical motion of the coupling element (24a, 24b) is controlled, **characterised in that** the drive shaft (20) is a hollow shaft, through which the supply and/or electric control lines are passed from a control device or supply device disposed in the apparatus frame (1) below a lower assembly plate (3) to the drive stations or other consumers.

2. Production and/or assembly apparatus according to claim 1, **characterised in that** on the vertical work shaft (20) two separate guide devices (21 a, 21 b) disposed one over another are provided, to which respectively a coupling element (24a, 24b) is coupled in motion, a respective drive (29, 30) of a work station (5) being coupled or couplable thereto.

3. Production and/or assembly apparatus according to claim 1 or 2, **characterised in that** one guide device (21 a, 21 b) is formed as an outwardly projecting continuous guide projection (25a, 25b), on which one or more running or sliding elements (26) provided on the coupling element (24a, 24b) run.

4. Production and/or assembly apparatus according to claim 3, **characterised in that** the running or sliding elements (26) provided on the guide projection (25a, 25b) are formed as rolls or rollers.

5. Production and/or assembly apparatus according to claim 3 or 4, **characterised in that** two running or sliding elements (26), in particular two rolls or rollers are disposed opposite one another and receive between them the guide projection (25a, 25b).

6. Production and/or assembly apparatus according to one of claims 3 to 5, **characterised in that** at least part of the running or sliding elements (26), in particular the rolls or rollers, are vertically adjustable.

7. Production and/or assembly apparatus according to claim 1 or 2, **characterised in that** the guide device is formed as a continuous guide groove, into which one or more running or sliding elements provided on the coupling element engage.

8. Production and/or assembly apparatus according to claim 7, **characterised in that** the running or sliding elements are formed as substantially horizontally projecting spigots.

9. Production and/or assembly apparatus according to one of claims 3 to 8, **characterised in that** the guide projection (25a, 25b) or the guide groove is formed on a ring (22a, 22b) disposed on the drive shaft (20).

10. Production and/or assembly apparatus according to one of claims 3 to 9, **characterised in that** the running or sliding elements (26) have a coating with a low resistance to friction or are composed from such a material.

11. Production and/or assembly apparatus according to one of the preceding claims **characterised in that** the motor (11) drives a driving gearwheel (17), which cooperates directly or indirectly with a gearwheel or toothed rim (19) provided on the vertical drive shaft (20).

12. Production and/or assembly apparatus according to one of the preceding claims, **characterised in that** via the motor (11) a driver wheel (36) may be driven in rotation, which has a driver (37), which cooperates for cyclical motion of the workpiece support table (4) with an index wheel (39) allocated thereto.

13. Production and/or assembly apparatus according to claim 11 and 12, **characterised in that** the driving gearwheel (17) drivable via the motor (11) cooperates via an intermediate gearwheel (18) with the gearwheel or toothed rim (19) on the shaft, and that a further gearwheel (34) rotatable about the same axis with the intermediate gearwheel (18) is provided, which cooperates with a gearwheel (35) provided on the driver wheel (36).

14. Production and/or assembly apparatus according to claim 13, **characterised in that** the further gearwheel (34) and the gearwheel (35) on the driver wheel are elliptical gearwheels.

15. Production and/or assembly apparatus according to one of claims 12 to 14, **characterised in that** the drive gearwheel (17) drivable via the motor (11) and the intermediate gearwheel (18) are detachable and mutually interchangeable.

## Revendications

1. Dispositif de production et de montage pour la fabrication et/ou le montage d'une pièce, comportant un bâti et un plateau de support, muni de plusieurs porte-pièces et apte à tourner de manière cadencée par rapport à un ou plusieurs postes de travail (5) fixes, ainsi qu'un mécanisme d'entraînement pour actionner un ou plusieurs postes de travail (5), lequel mécanisme d'entraînement comporte un moteur (11) et au moins un élément de couplage (24a, 24b), qui est couplé indirectement en mouvement avec le moteur (11) et est mobile sensiblement verticalement et auquel est couplé ou peut être couplé un entraîneur d'un poste de travail (5), le mécanisme d'entraînement comportant un arbre de travail (20) monté verticalement, qui peut être entraîné en rotation par le moteur (11) et est muni d'un dispositif de guidage (21 a, 21 b), avec lequel l'élément de couplage (24a, 24b) est couplé en mouvement et par l'intermédiaire duquel est commandé le mouvement vertical de l'élément de couplage (24a, 24b), **caractérisé en ce que** l'arbre d'entraînement (20) est un arbre creux, à travers lequel les lignes d'alimentation et/ou les lignes de commande électriques pour un dispositif de commande ou dispositif d'alimentation, monté dans le bâti (1) du dispositif en dessous d'un plateau de montage (3) inférieur, sont guidées vers les postes d'entraînement ou autres consommateurs.

2. Dispositif de production et de montage selon la revendication 1, **caractérisé en ce que** sur l'arbre de travail (20) vertical sont prévus deux dispositifs de guidage (21a, 21b) séparés, disposés l'un au-dessus de l'autre, avec chacun desquels un entraîneur (29, 30) d'un poste de travail (5) est couplé ou peut être couplé en mouvement.

3. Dispositif de production et de montage selon la revendication 1 ou 2, **caractérisé en ce qu'**un dispositif de guidage (21 a, 21 b) est réalisé sous la forme d'une saillie de guidage (25a, 25b) périphérique, qui forme saillie vers l'extérieur et sur laquelle se déplacent un ou plusieurs éléments de roulement ou de glissement (26), prévus sur l'élément de couplage (24a, 24b).

4. Dispositif de production et de montage selon la revendication 3, **caractérisé en ce que** le ou les éléments de roulement ou de glissement (26), qui se déplacent sur la saillie de guidage (25a, 25b) sont réalisés sous forme de galets ou rouleaux.

5. Dispositif de production et de montage selon la revendication 3 ou 4, **caractérisé en ce que** deux éléments de roulement ou glissement (26), en particulier deux galets ou rouleaux, sont disposés face à face et reçoivent entre eux la saillie de guidage (25a, 25b).

6. Dispositif de production et de montage selon l'une quelconque des revendications 3 à 5, **caractérisé en ce qu'**au moins une partie des éléments de roulement ou glissement (26), en particulier des galets ou rouleaux, peuvent être déplacés verticalement.

7. Dispositif de production et de montage selon la revendication 1 ou 2, **caractérisé en ce que** le dispositif de guidage est réalisé sous la forme d'une rainure de guidage, dans laquelle s'engagent un ou plusieurs éléments de roulement ou glissement prévus sur l'élément de couplage.

8. Dispositif de production et de montage selon la revendication 7, **caractérisé en ce que** le ou les éléments de roulement ou glissement sont réalisés sous la forme de tétons, formant saillie sensiblement dans le sens horizontal.

9. Dispositif de production et de montage selon l'une quelconque des revendications 3 à 8, **caractérisé en ce que** la saillie de guidage (25a, 25b) ou la rainure de guidage est réalisée sur une bague (22a, 22b) disposée sur l'arbre d'entraînement (20).

10. Dispositif de production et de montage selon l'une quelconque des revendications 3 à 9, **caractérisé en ce que** le ou les éléments de roulement ou glissement (26) comportent un revêtement avec une faible résistance au frottement ou sont réalisés dans un tel matériau.

11. Dispositif de production et de montage selon l'une quelconque des revendications précédentes, **caractérisé en ce que** le moteur (11) actionne un pignon d'entraînement (17), qui coopère directement ou indirectement avec une roue dentée ou couronne dentée (19), prévue sur l'arbre d'entraînement (20) vertical.

12. Dispositif de production et de montage selon l'une quelconque des revendications précédentes, **caractérisé en ce qu'**un disque d'actionnement (36) peut être entraîné en rotation par le moteur (11) et comporte un entraîneur (37) qui, en vue du mouvement cadencé du plateau de support (4), coopère avec un disque indexé (39) associé à ce dernier.

13. Dispositif de production et de montage selon les revendications 11 et 12, **caractérisé en ce que** le pignon d'entraînement (17), apte à être actionné par le moteur (11), coopère avec la roue dentée ou couronne dentée (19) du côté de l'arbre par l'intermédiaire d'un pignon intermédiaire (18), et **en ce qu'**il est prévu un autre pignon (34), qui est apte à tourner avec le pignon intermédiaire (18) autour du même axe et qui coopère avec un pignon (35) prévu sur le disque d'actionnement (36).

14. Dispositif de production et de montage selon la revendication 13, **caractérisé en ce que** l'autre pignon (34) et le pignon (35) du côté du disque d'actionnement sont des roues dentées ellipsoïdales.

15. Dispositif de production et de montage selon l'une quelconque des revendications 12 à 14, **caractérisé en ce que** le pignon d'entraînement (17), apte à être actionné par le moteur (11), et le pignon intermédiaire (18) sont montés de manière amovible et permutables l'un par rapport à l'autre.
